# EUROPÄISCHE PATENTANMELDUNG

(11) **EP 0 769 261 A1**
(43) Veröffentlichungstag der Anmeldung: **23.04.1997**
(21) Anmeldenummer: 96114991.1
(22) Anmeldetag: 19.09.1996
(51) Int. Cl.: A47B 77/06, B60P 3/36

(54) **Einbau-Möbelteil für Wohnwagen oder dergleichen**

(30) Priorität: 10.11.1995 DE 29517812 U
(71) Anmelder: Knaus GmbH, 94118 Jandelsbrunn (DE)
(72) Erfinder: Cürten, Joachim, 89079 Ulm (DE)
(74) Vertreter: Matschkur, Götz, Lindner Patent- und Rechtsanwälte

(57) **Zusammenfassung**

Einbau-Möbelteil für Wohnwagen, Wohnmobile od.dgl., insbesondere Einbauspüle oder Küchenblock (2), mit einer im Bereich der vorderen Oberkante angeordneten Multifunktionsschiene (3) zum Einhängen vorstehender Zusatzteile.

## Beschreibung

Die Erfindung bezieht sich auf ein Einbau-Möbelteil für Wohnwagen, Wohnmobile od.dgl., insbesondere eine Einbauspüle oder einen Küchenblock.

Aufgrund der beengten Raumverhältnisse in Wohnwagen, Wohnmobilen od.dgl. sind die Möglichkeiten einer Ablage oder eines Aufhängens von beim Kochen oder Spülen benötigten Zusatzteilen außerordentlich beschränkt, wobei das Prinzip einer herausziebaren zusätzlichen Tischplatte gerade bei Herden oder Spülen gar nicht gangbar ist, da die Tischplatte wegen des Spülbeckens oder der nach unten ragenden Elektroteile gar nicht unter der oberen Abdeckplatte einschiebbar ist.

Der Erfindung liegt daher die Aufgabe zugrunde, ein Einbaumöbelteil zu schaffen, bei welchem auch in solchen Fällen, bei denen ein Einschieben ins Innere des Möbelteils gar nicht möglich ist, Zusatzteile, beispielsweise zur Vergrößerung der Auflageoberfläche, am Möbelteil anbringbar sind.

Zur Lösung dieser Aufgabe ist erfindungsgemäß vorgesehen, daß im Bereich der vorderen Oberkante eine Multifunktionsschiene zum Einhängen vorstehender Zusatzteile, wie beispielsweise eines Handtuch-Aufhängebügels oder eines Auflagebretts, vorgesehen ist.

Dabei kann in Weiterbildung der Erfindung im Falle einer Einbauspüle vorteilhafterweise vorgesehen sein, daß das Auflagebrett so ausgebildet ist, daß es wahlweise als Abdeckplatte für das Spülbecken verwendbar ist. Im Falle, daß die Spüle zum Kochen mit herangezogen wird, indem dort beispielsweise Gemüse od.dgl. geputzt wird, und man hierfür eine vergrößerte Auflagefläche braucht, wird die Abdeckplatte für das Spülbecken als Auflagebrett in die Multifunktionsschiene eingehängt und vergrößert somit die Auflageoberfläche der Spüle entsprechend. Wenn die Arbeiten beendet sind, wird das Auflagebrett wieder ausgehängt und dann entweder in einer Schublade oder sonstwo verstaut, oder aber im angesprochenen Sonderfall einer Einbauspüle als Abdeckplatte auf das Spülbecken aufgelegt.

Prinzipiell kann die Multifunktonsschiene so ausgebaut sein, daß die Zusatzteile von der Seite her eingefädelt und verschiebbar in ihr gehaltert sind. Bevorzugt soll die Ausbildung aber so getroffen sein, daß die Multifunktionsschiene am oberen Ende zum schrägen Ein- und Aushaken des mit einem entsprechenden Hakenrand versehenen Zusatzteils hinterschnitten ist. In diesem Fall muß seitlich kein Platz zur Verfügung stehen, um das Einfädeln der Zusatzteile in die Multifunktionsschiene vorzusehen, sondern man kann diese an jeder Stelle durch schräges Ansetzen einhängen und dann in die waagrechte Gebrauchsstellung herunterklappen.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Ansicht einer erfindungsgemäß ausgestalteten Einbauspüle mit einer Abdeckplatte für das Spülbecken,
- Fig. 2: eine Ansicht der Spüle nach Fig. 1, bei der in die Multifunktionsschiene die Abdeckplatte des Spülbeckens sowie ein Handtuchbügel eingehängt sind,

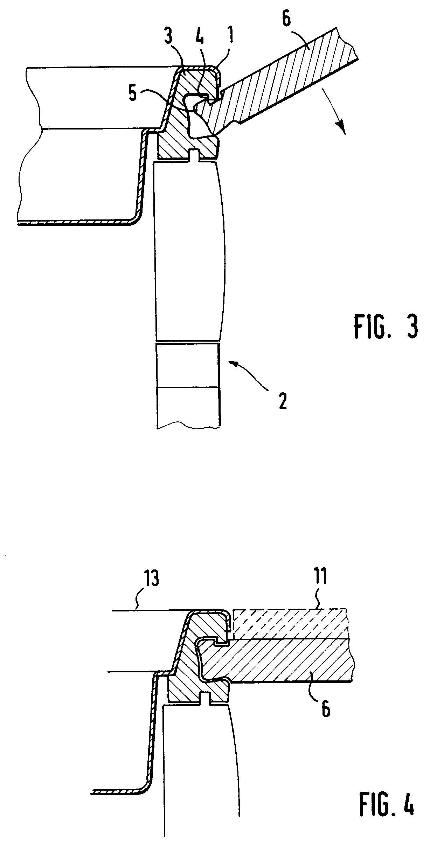

- Fig. 3: einen vergrößerten Schnitt längs der Linie III-III in Fig. 2 beim Einhängen der Abdeckplatte, und
- Fig. 4: einen der Fig. 3 entsprechenden Schnitt in der waagrechten Betriebsstellung der Abdeckplatte.

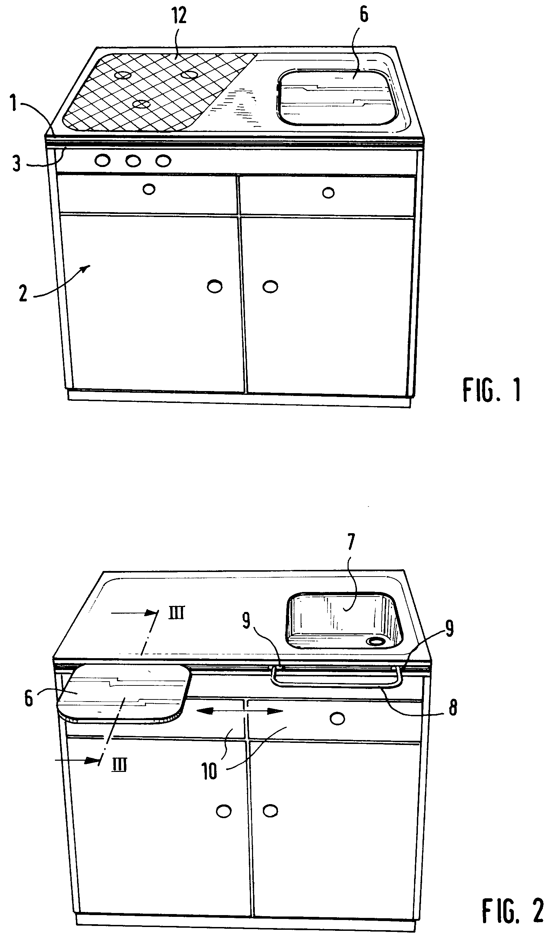

Im gezeigten Ausführungsbeispiel ist im Bereich der vorderen Oberkante 1 des als Ausführungsbeispiel der Erfindung gezeigten Küchenblocks 2 eine Multifunktionsschiene 3 angeordnet, die am oberen Ende mit einer Hinterschneidung 4 versehen ist, in welche ein Zusatzteil eingehakt werden kann, das am hinteren Ende mit einem entsprechenden Hakenteil 5 versehen ist. Dabei kann es sich, wie in Fig. 2 gezeigt, um ein zusätzliches Auflagebrett handeln, mit der darüber hinaus gegebenen Besonderheit, daß dieses Auflagebrett 6 gleichzeitig als Abdeckplatte für das Spülbecken 7 verwendet werden kann, wie man in Fig. 1 erkennt. Darüber hinaus können auch andere Zusatzteile eingehängt werden, wie beispielsweise der in Fig. 2 zu erkennende Handtuch-Aufhängebügel 8, deren Schenkel mit Einhängeteilen 9 versehen sind, die ihrerseits wieder entsprechend ausgebildet sind, wie der Hakenrand 5 des Auflagebretts 6. Wenn die Arbeiten an der Spüle beendet sind, können die Zusatzteile 6, 8 nach oben angekippt und dann sehr einfach wieder aus der Multifunktonsschiene ausgehängt werden, um, wie beispielsweise beim Handtuchbügel, entweder in einer der Schubladen 10 verstaut zu werden, oder aber um als Spülbecken-Abdeckplatte zu fungieren, wie dies bereits beschrieben wurde.

Die Erfindung ist nicht auf die dargestellten Ausführungsbeispiele beschränkt. Neben anderen Zusatzteilen wäre es insbesondere auch möglich, die Abdeckplatte 6 derart verstärkt auszubilden, wie es gestrichelt in Fig. 4 angedeutet ist, so daß die obere Auflagefläche 11 des gezeigten Küchenblocks 2 fluchtet, in den auch die Heizplatte 12 mit den Kochfeldern integriert sein kann (Fig. 1).

## Patentansprüche

1. Einbau-Möbelteil für Wohnwagen, Wohnmobile od.dgl., insbesondere Einbauspüle oder Küchenblock, gekennzeichnet durch eine im Bereich der vorderen Oberkante (1) angeordnete Multifunktonsschiene (3) zum Einhängen vorstehender Zusatzteile (6, 8).

2. Einbau-Möbelteil nach Anspruch 1, dadurch gekennzeichnet, daß das Zusatzteil ein Handtuch-Aufhängebügel (8) ist.

3. Einbau-Möbelteil nach Anspruch 1 oder 2, dadurch gekennzeichnet, daß das Zusatzteil ein Auflagebrett (6) ist.

4. Einbau-Möbelteil nach Anspruch 3, dadurch gekennzeichnet, daß das Auflagebrett (6) so ausgebildet ist, daß es wahlweise als Abdeckplatte für das Spülbecken (7) verwendbar ist.

5. Einbau-Möbelteil nach einem der Ansprüche 1 bis 4, dadurch gekennzeichnet, daß die Multifunktonsschiene (3) am oberen Ende zum schrägen Ein- und Aushaken des mit einem Hakenrand (5) versehenen Zusatzteils (6, 8) hinterschnitten ist.
